# EUROPEAN PATENT APPLICATION

(11) **EP 2 495 669 A1**
(43) Date of publication of application: **05.09.2012**
(21) Application number: 11181034.7
(22) Date of filing: 13.09.2011
(51) Int. Cl.: G06F 17/30

(54) **Dynamic creation of materialized database views**

(30) Priority: 13.09.2010 US 880560
(71) Applicant: Synchronoss Technologies, Inc., Bridgewater NJ 08807 (US)
(72) Inventor: Stimson, Stephen R., Stroudsburg, PA Pennsylvania 18360 (US)
(74) Representative: Office Freylinger

(57) **Abstract**

A control file is created which ordinary views that are to be converted to materialized views. A conversion program controlled by the control file can then create all of the materialized views at one time, and only that single conversion program needs to be written. By running the conversion program periodically, it becomes possible to create automatic updates of the materialized views.

## Description

### BACKGROUND OF THE INVENTION

The present invention relates generally to databases and, more particularly, concerns a method for the dynamic creation of materialized views, to permit fast, efficient and convenient use of databases and creation of reports.

A "database" is an organized collection of related data. The data is organized into objects called a "table", which is a set of data elements or values organized in accordance with the metaphor of a table containing vertical columns and horizontal rows. The table has a predefined number of columns, but it can have any number of rows, each row being identified by the value appearing in one or more columns, defined as the key.

When a database query is stored, another type of object, a "view" is often created, which is a virtual table computed from the data in the database. Unlike a table, a view is not part of the structure of the database, but it is created only for a single program executed by a single user, and it exists only as long as it takes for that program to execute once. It often takes database software a considerable amount of time to collect and organize the data represented by a view. When multiple users request data using the same view, the database software must collect the data for each user as a separate database process.

To cope with the computational burden imposed by generating views, a "materialized view" was created. A materialized view represents the results of a query, like an ordinary view, but it is stored as a concrete table that can be updated at a specified frequency from the original database tables. Since it is stored, a materialized view need not be regenerated constantly, and it may be shared among different users.

Creating and maintaining materialized views is often a complex process requiring a considerable number of time-consuming specialized programming steps. It usually takes considerable time for programmers and database administrators to create the materialized views and to create the procedures that are required to maintain them.

Creation of materialized views usually requires cooperation between an application programmer and a database administrator, individuals who are usually in two distinct departments within an organization. These individuals usually have different priorities, and a database administrator, charged with maintaining a high-performance, reliable database, will often view changes to the database as a potential performance problem. The programmer cannot start writing programs that will use a materialized view until all the database administrators have created the underlying ordinary view. Often, the programmer will experience a significant delay while waiting for the database administrators to create the views. Since materialized views are usually considered a convenience rather than a necessity, database administrators tend to delay their creation until long after serious performance problems are discovered. Materialized views are then created to repair the performance problems.

A common problem with database applications is the time it takes to develop and produce reports which accurately reflect business activity. Moreover, this gets to be more of a problem as tables grow in size and as business users are given "end-user" tools to write their own reports. Often, such tools create reports that do not return results for hours, because the tables being read contain a very large amount of data. Organizations have spent millions of dollars designing and developing databases specifically designed to produce reports, often referred to as "data warehouses."

There is therefore a need in the prior art for more efficient creation and updating of materialized views and reports.

In accordance with the present invention a control file is created which identifies tables that are to be converted to materialized views. A conversion program referencing the control file can then create all of the materialized views at one time, and only that single conversion program needs to be written. By running the conversion program periodically, it becomes possible to create automatic updates of the materialized views.

### BRIEF DESCRIPTION OF THE DRAWINGS

The foregoing brief description and further objects, features and advantages of the present invention will be understood more completely from the following detailed description of a presently preferred, but nonetheless illustrative, embodiment in accordance with the present invention, with reference being had to the accompanying drawings, in which:

Fig. 1 is a schematic block diagram representation of a database for which an existing application program has been written;

Fig. 2 is flowchart illustrating a process for creating dynamic, materialized views in accordance with an embodiment of the present invention;

Fig. 3 illustrates an exemplary query to create the master view;

Fig. 4 illustrates an exemplary query to create a view from a secondary table; and

Fig. 5 is a schematic block diagram representation of the three reporting materialized views created from the tables in Fig. 1.

### DETAILED DESCRIPTION OF THE PREFERRED EMBODIMENT

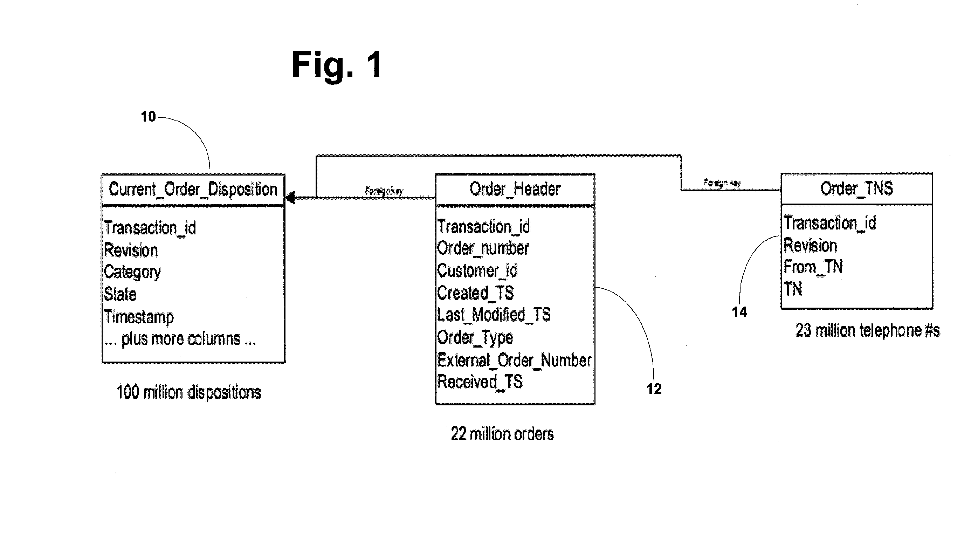

Fig. 1 is a schematic block diagram representation of a database system, running on a computer or network, for which an existing application program has been written. For simplicity, only three related tables of the database are shown, because they are needed for the application. One of the tables in the database (represented by block 10) is the core table for the application, in that identifies the subset of the datathat needs to be included in the materialized view for the reporting application. The name of the table is "Current_Order_Disposition", and below the name is a list of the names of the columns in the table. Two other tables 12, 14, (named "Order_header" and "Order_tns") hereafter referred to as secondary tables, are needed for the application and are directly related to the core table. Each secondary table contains a column, called a foreign key, which is also present in table 10, in this case "Transaction_id." The secondary tables are linked to the core table via the foreign key.

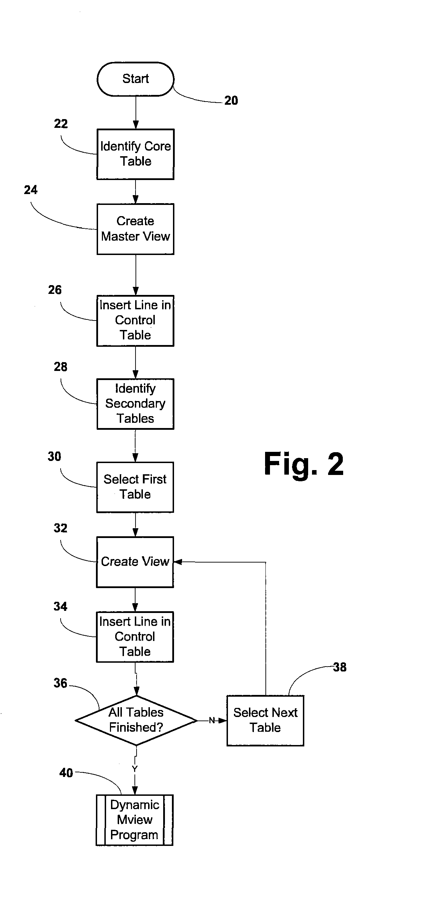

Fig. 2 is flowchart illustrating a process for defining dynamic, materialized views in accordance with an embodiment of the present invention. The process starts at block 20, and at block 22, the core table 10 is identified. At block 24, a master view is created from the core table, for example by generating a query to extract certain information from the table. The query might, for example, limit which columns will appear in the master materialized view, and/or it might limit the range of values that appear in a column. As an example, it might limit the timestamp to a particular range of dates.

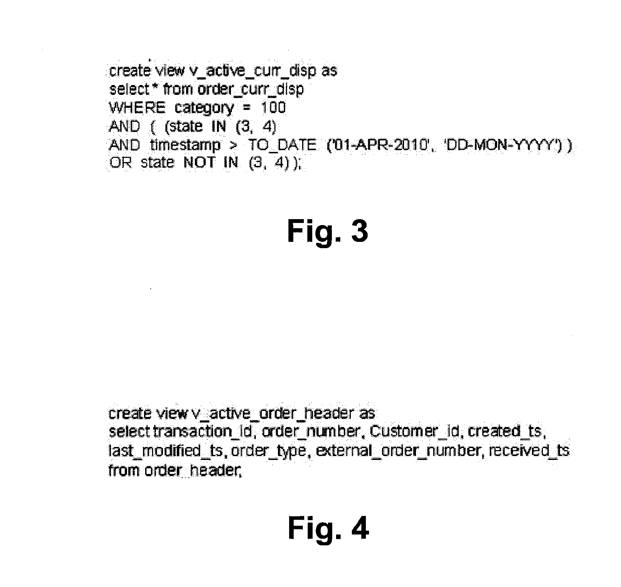

Fig. 3 illustrates an exemplary query to create the master view "v_active_curr_disp." The first line instructs the system to create the view by name. The second line identifies a table from which the view is to be created, and the remaining lines define the columns to appear and set value ranges for the columns.

The system includes a program which will be referred to as the "dynamic Mview program", discussed further below. This program executes instructions in a control table. At block 26, a line of code values is inserted into the control table. That line of values identifies the core table and the master materialized view and, when executed, in accordance with the invention, causes a materialized view to be generated from the master view. In this case, the inserted line of code values might, for examples, read "rpt_hot_order_master_mv, v_active_curr_disp, mstr", instructing the program to create a materialized view named rpt_hot_order_master_mv from the view "v_active_curr_disp" and assign it the nickname "mstr." The nickname is used for creating indices on the materialized view.

At block 28, the secondary tables 12, 14 are identified, at block 30 the table 12 is selected, and at block 32, a view is created from table 12, for example by generating a query to extract certain columns from the table. Fig. 4 illustrates an example of such a query. In this case, this is merely an instruction to create the view "v_active_order_header" and which columns to include from the table "order_header."

At block 34, a line of code values is inserted into the control table that will cause the generation of the respective materialized view. This line might read "rpt_hot_order_hdr_mv, v_active_order_header, oh", instructing the dynamic Mview program to create a materialized view by name (named rpt_hot_order_hdr_mv) from the view "v_active_order_header" and to assign it the nickname "oh." The dynamic Mview program the subset of data required from this table by including only those foreign key values that were already included in the master materialized view.

A test is performed at block 36 to determine whether all of the secondary tables have been processed and, if so, control transfers to block 40. If any secondary table has not been processed, the next table is selected at block 38 and control returns to block 32, where a materialized view and line of instructions are created for table 14. If there were additional secondary tables, the application program would continue operating in the loop containing block's 32, 34, 36 and 38 until all of the tables were handled.

At block 40, control transfers to the dynamic Mview program, which executes based on the code values in the control table to create the materialized views (this is the "create_all" phase). Preferably, the program executes "refresh_all" phase periodically, for example every 15 minutes. When it encounters an instruction that has already been executed, it will not re-create the materialized view, but will simply update it.

Programmers routinely write programs to convert tables to materialized views. In fact, prior to the present invention, a programmer would have had to write a separate program to convert each table to a materialized view and to update it, subject to all the organizational complications and delays discussed above. By utilizing a control table and a the dynamic Mview program that takes instructions from the table, all conversions are done at once, and periodic updates are automatic. Thus, converting views to materialized views, a process that previously could have taken months, can now be performed in a matter of minutes (the time required to create the instruction lines in the control table), thanks to the present invention.

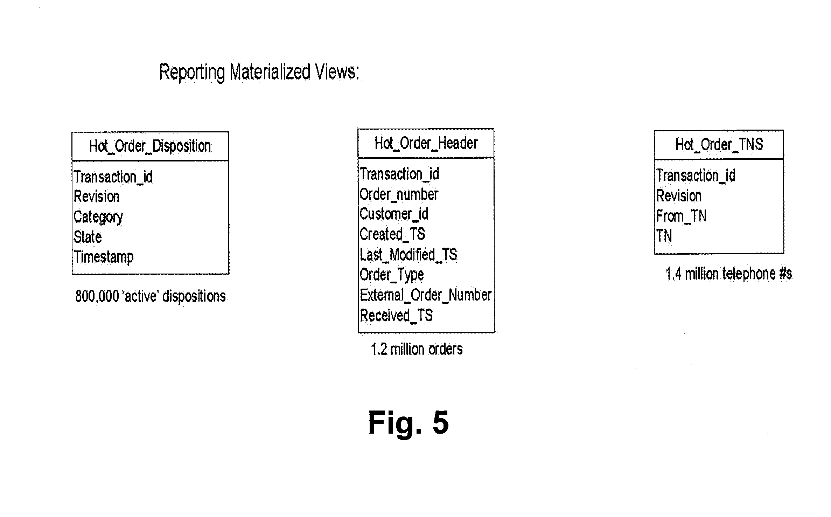

Fig. 5 is a schematic block diagram representation of a report comprising three materialized views created by the dynamic Mview program in the previous example. The leftmost materialized view "hot_order_disposition" is a subset of the first five columns of table 10 containing 800,000 active dispositions of the 100 million dispositions in table 10. The middle materialized view "hot_order_header" contains all of the columns of table 12 and 1.2 million of the original 22 million orders; and the rightmost materialized view "hot_order_tns" contains all of the columns of table 14 and 1.4 million of the original 23 million telephone numbers.

Although a preferred embodiment of the invention has been disclosed for illustrative purposes, those skilled in the art will appreciate that many additions, modifications and substitutions are possible without departing from the scope and spirit of the invention as defined by the accompanying claims.

## Claims

1. A method for creating a materialized view from an ordinary view in a database system, comprising the steps of:
placing control code values in a control file, the control code identifying the ordinary view and specifying the materialized view to be created;
executing a conversion program in the database system which is constructed to convert an ordinary view to a materialized view, the conversion program receiving the control file and being responsive thereto to perform the conversion specified by the control code.

2. The method of claim 1 wherein the materialized view is a report generated from the database system.

3. The method of claim 1 wherein the conversion program is constructed to execute periodically, creating updates of the materialized view.

4. The method of claim 1 wherein the database system contains plural views to be converted to materialized views, the placing step comprising placing control codes for some of the views into the control file, the executing step performing a conversion in response to each control code.

5. The method of claim 4 wherein the materialized views comprise a report generated from the database system.

6. The method of claim 4 wherein the conversion program is constructed to execute periodically, creating updates of the materialized views.

7. The method of claim 4, further comprising, prior to the placing step, executing a query to create one of the ordinary views.

8. The method of claim 1, further comprising, prior to the placing step, executing a query to create the ordinary view.

9. In a database management system, the combination of:
a control file containing a control code values identifying an ordinary view existing in the system and specifying a materialized view to be created from the ordinary view; and
a conversion program in the system which is constructed to convert an ordinary view into a materialized view, the conversion program being responsive to the control file to perform the conversion specified by the control code.

10. The combination of claim 9 wherein the conversion program creates a materialized view which is a report generated from the system.

11. The combination of claim 9 wherein the conversion program is constructed to execute periodically, creating updates of the materialized view.

12. The combination of claim 9 wherein the database management system contains plural views to be converted to materialized views, the control file containing control codes for some of the views, the conversion program performing a conversion in response to each control code.

13. The combination of claim 12 wherein the conversion program creates a materialized view which is a report generated from the system.

14. The combination of claim 12 wherein the conversion program is constructed to execute periodically, creating updates of the materialized views.

15. In a database management system, an executable program comprising:
a first executable module constructed to read control code values in a control file and to extract therefrom information identifying an ordinary view existing in the system and information specifying a materialized view to be created from the ordinary view; and
a second executable module constructed to convert the identified ordinary view to the specified materialized view.

16. The program of claim 15 wherein the second executable module creates a materialized view which is a report generated from the system.

17. The program of claim 15 wherein the second executable module is constructed to execute periodically, creating updates of the materialized view.

18. The program of claim 15 wherein the database management system contains plural views to be converted to materialized views and the control file contains a plurality of control codes, the second executable module program performing a conversion in response to each control code.

19. The program of claim 18 wherein the second executable module creates a materialized view which is a report generated from the system.

20. The program of claim 18 wherein the second executable module is constructed to execute periodically, creating updates of the materialized view.
